(19) Europäisches Patentamt / European Patent Office / Office européen des brevets

(11) EP 4 523 514 A1

(12) EUROPÄISCHE PATENTANMELDUNG

(43) Veröffentlichungstag:
19.03.2025  Patentblatt 2025/12

(21) Anmeldenummer: 24190254.3

(22) Anmeldetag: 23.07.2024

(51) Internationale Patentklassifikation (IPC):
*A01D 41/127* [(2006.01)]

(52) Gemeinsame Patentklassifikation (CPC):
A01D 41/127; A01D 41/1278

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
GE KH MA MD TN

(30) Priorität: 14.09.2023  DE 102023124828

(71) Anmelder: CLAAS Selbstfahrende Erntemaschinen GmbH
33428 Harsewinkel (DE)

(72) Erfinder:
• Bormann, Bastian
  33334 Gütersloh (DE)

• Wilken, Andreas
  49143 Bissendorf (DE)
• Thiesmann, Waldemar
  49080 Osnabrück (DE)
• Heufekes, Maik
  48147 Münster (DE)
• Bussmann, Christoph
  33428 Harsewinkel (DE)
• Korthals, Timo
  33818 Leopoldshöhe (DE)
• Töniges, Torben
  33602 Bielefeld (DE)
• Neitemeier, Dennis
  59510 Lippetal (DE)

(74) Vertreter: CLAAS Gruppe
Mühlenwinkel 1
33428 Harsewinkel (DE)

(54) **VERFAHREN ZUR ANSTEUERUNG MINDESTENS EINER SELBSTFAHRENDEN LANDWIRTSCHAFTLICHEN ARBEITSMASCHINE**

(57) Die vorliegende Erfindung betrifft ein Verfahren zur Ansteuerung mindestens einer selbstfahrenden landwirtschaftlichen Arbeitsmaschine (1) gemäß dem Oberbegriff von Anspruch 1.

Um ein Verfahren zur Ansteuerung einer selbstfahrenden Arbeitsmaschine (1) bereitzustellen, das die Probleme aus dem Stand der Technik behebt, sind erfindungsgemäß die folgenden Verfahrensschritte vorgeschlagen:

- Erfassen einer ersten Vorfeldinformation des geografischen Vorfelds (6) mittels des Sensors (7) des Vorfelderfassungssystems (5).
- Übermitteln der ersten Vorfeldinformation an das Steuersystem (8).
- Übermitteln einer zweiten Vorfeldinformation an das Steuersystem (8), wobei die zweite Vorfeldinformation mindestens eine Information aus einer Biomasseprognosekarte (27) umfasst.
- Bestimmen einer Prognosegüte (35, 36) zumindest der ersten und/oder zweiten Vorfeldinformation.
- Bestimmen mindestens eines Maschinenparameters zur Ansteuerung des Fahrantriebs und/oder des Arbeitsorgans (2) der selbstfahrenden Arbeitsmaschine (1) in Abhängigkeit zumindest der ersten und der zweiten Vorfeldinformation unter Berücksichtigung der jeweiligen Prognosegüte (35, 36) mittels der Recheneinheit (9) des Steuersystems (8).

Fig. 2

**Beschreibung**

Die vorliegende Anmeldung betrifft ein Verfahren zur Ansteuerung mindestens einer selbstfahrenden landwirtschaftlichen Arbeitsmaschine gemäß dem Oberbegriff von Anspruch 1. Des Weiteren betrifft die Anmeldung eine selbstfahrende landwirtschaftliche Arbeitsmaschine gemäß dem Oberbegriff von Anspruch 14.

Selbstfahrenden landwirtschaftlichen Arbeitsmaschinen wie Mähdreschern oder Feldhäckslern sind typischerweise eine Vielzahl von Arbeitsorganen zur Verarbeitung eines von einem abzuerntenden Feld aufgenommenen Ernteguts in Rahmen eines Ernteprozesses zugeordnet. Im Sinne der vorliegenden Erfindung wird dabei unter "Erntegut" ein gesamter aufgenommener Gutstrom verstanden, also einschließlich derjenigen Körner, welche noch nicht als Korngut aus dem Gutstrom gewonnen wurden, und den Körnern, welche ggf. in dem Gutstrom als Verlust verbleiben und mit dem Stroh abgelegt werden.

Ein Arbeitsorgan kann beispielhaft als ein an die Arbeitsmaschine anbringbares Vorsatzgerät, als Schrägförderer, als Dreschvorrichtung, als Abscheidevorrichtung, als Reinigungsvorrichtung, als Kornelevator, als Überkehrschnecke, als Korntankentleervorrichtung, als Nachbeschleuniger, als Kornschnecke und/oder als Korntankschnecke ausgebildet sein.

Eine als Mähdrescher ausgestaltete selbstfahrende landwirtschaftliche Arbeitsmaschine dient der Mahd und dem Drusch von Körnerfrüchten. Der Arbeitsmaschine sind dabei in aller Regel eine Reihe von Arbeitsorganen wie Schneidwerk, Dreschwerk, Abscheideanordnung, Reinigungsanordnung und Verteilanordnung zugeordnet. Ein Drusch erfolgt durch das Dreschwerk, welches aus dem von dem Mähdrescher durch das Schneidwerk aufgenommenen Erntegut Korngut gewinnt, das nach dem Dreschen der Abscheideanordnung und anschließend über die Reinigungsanordnung einem Getreidetank zugeführt wird. Als weitere Bestandteile des Ernteguts bleiben z.B. die Spreu und das Stroh übrig, welche entweder über das Feld verteilt oder - im Falle des Strohs - auf Schwad z.B. zur späteren Aufnahme durch eine Ballenpresse gelegt werden können.

Die Arbeitsorgane werden dabei durch Vorgabe verschiedener Maschinenparameter angesteuert, die während des Ernteprozesses anzupassen sind. Mit der Einstellung dieser Maschinenparameter lässt sich eine zumindest teilweise autonome Einstellung und Optimierung des Ernteprozesses erzielen.

Ein Dreschwerk kann beispielsweise durch die Vorgabe verschiedener Dreschwerksparameter angesteuert werden. Hierunter fallen in Abhängigkeit vom Aufbau des Dreschwerks Antriebsparameter wie beispielsweise eine Trommeldrehzahl oder sonstige Bewegungskennzahlen der Dreschtrommel, sowie eine Korbweite - also der Abstand zwischen der Dreschtrommel und einem Dreschkorb. Der optimalen Ansteuerung der Arbeitsorgane kommt für eine erzielbare Erntequalität und einen erzielbaren Erntegutdurchsatz besondere Bedeutung zu.

Weiterhin weist die selbstfahrende landwirtschaftliche Arbeitsmaschine mindestens einen Fahrtrieb zum Antrieb der Arbeitsmaschine auf. Eine von dem Fahrtrieb typischerweise einzustellende Fahrgeschwindigkeit bestimmt dabei in Verbindung mit einer Bestandsdichte des abzuerntenden Felds den durch die Arbeitsmaschine hindurchlaufenden Erntegutdurchsatz.

Im Sinne der vorliegenden Erfindung ist der Begriff "Bestandsdichte" weit auszulegen. Er umfasst jede Angabe, die Aufschluss darüber gibt, welche Pflanzenmenge pro Fläche im abzuerntenden Feld vorhanden ist. Dies kann beispielsweise die Anzahl der Pflanzenstängel pro Fläche, das Pflanzenvolumen pro Fläche oder dergleichen sein. Der Begriff "Fläche" bezeichnet hier die Fläche, oder einen Teil der Fläche, des abzuerntenden Felds.

Als "Erntegutdurchsatz" wird im Sinne der vorliegenden Erfindung die pro Zeit von der selbstfahrenden landwirtschaftlichen Arbeitsmaschine aufgenommene Menge des Ernteguts verstanden. Vorzugsweise handelt es sich bei dem Erntegutdurchsatz um einen Volumen- oder Massenstrom.

Aufgrund der vorbeschriebenen Korrelation hängen eine Vielzahl von Maschinenparametern der Arbeitsorgane der selbstfahrenden Arbeitsmaschine von der Fahrgeschwindigkeit ab. Der Fahrtrieb wird dabei beispielsweise durch einen Verbrennungsmotor, welcher insbesondere in Form eines Dieselmotors ausgebildet sein kann, mit Energie versorgt und kann neben einem Vortrieb der Arbeitsmaschine auch zum Antrieb der Arbeitsorgane der Arbeitsmaschine vorgesehen sein. Der Fahrtrieb ermöglicht einen Vortrieb der Arbeitsmaschine mit einer Fahrgeschwindigkeit in eine Fahrtrichtung entlang des abzuerntenden Felds.

Ferner umfasst die Arbeitsmaschine mindestens ein Vorfelderfassungssystem, welches Informationen hinsichtlich eines geografischen Vorfelds der selbstfahrenden Arbeitsmaschine erfasst.

Im Sinne der vorliegenden Erfindung wird unter einem "geographischen Vorfeld" eine Umgebung der selbstfahrenden Arbeitsmaschine verstanden. Das Vorfeld betrifft mithin nichts, was sich innerhalb der Arbeitsmaschine abspielt. Dem Sensor ist ein räumlicher Geltungsbereich zugeordnet, der sich in der Umgebung der Arbeitsmaschine, vorzugsweise unmittelbar vor der Arbeitsmaschine in Fahrtrichtung betrachtet, befindet. Zu dem geografischen Vorfeld der selbstfahrenden Arbeitsmaschine zählt mithin insbesondere das abzuerntende Feld bzw. zumindest ein aktuell abzuerntender Teilabschnitt des Felds.

Das Vorfelderfassungssystem umfasst dabei mindestens einen an der selbstfahrenden Arbeitsmaschine angeordneten Sensor. Die von dem Sensor erfasste Information kann zahlreiche unterschiedliche Aspekte des Vorfelds der Arbeitsmaschine betreffen. Hierunterfallen beispielsweise eine Information betreffend einen Abschnitt des abzuerntenden Felds, eine Information betreffend die geometrischen Verhältnisse des abzuerntenden Feldes oder eine Information betreffend eine Umgebung des abzuerntenden Felds.

Weiterhin weist die Arbeitsmaschine ein Steuersystem auf. Das Steuersystem weist wiederum mindestens eine Recheneinheit zur Verarbeitung der von dem Vorfelderfassungssystem erfassten Informationen zu mindestens einem Maschinenparameter zur Ansteuerung des mindestens einen Fahrantriebs und/oder des mindestens einen Arbeitsorgans der selbstfahrenden Arbeitsmaschine auf.

Typischerweise können die Arbeitsorgane der Arbeitsmaschine mittels des Steuersystems basierend auf einer Ernteprozessstrategie angesteuert werden. Die Ernteprozessstrategie umfasst dabei eine Zielvorgabe der Einstellung oder der Optimierung von Ernteprozessparametern. Die Umsetzung der Ernteprozessstrategie kann dabei jeweils durch eine entsprechende Vorgabe von Maschinenparametern der Arbeitsorgane durch das Steuersystem erfolgen. In Abhängigkeit von der Ausgestaltung des Steuersystems kann es möglich sein, die jeweilige Ernteprozessstrategie aus einer Anzahl vorbestimmter Ernteprozessstrategien auszuwählen und/oder eine Parametrierung der jeweiligen Ernteprozessstrategie benutzerdefiniert vorzunehmen.

Die EP 3 085 221 B1 beschreibt ein Erntesystem mit einer selbstfahrenden Arbeitsmaschine, insbesondere einem Mähdrescher, mit mehreren Arbeitsorgangen sowie einem Fahrerassistenzsystem. Weiterhin weist das Erntesystem ein Umfeldsensorsystem auf, welches Umfeldinformationen erfasst. Darüber hinaus weist das Erntesystem eine Rechenvorrichtung auf, die in Abhängigkeit von den Umfeldinformationen Maschinenparameter für die Arbeitsorgane definiert. Bei den Umfeldinformationen kann es sich insbesondere um einen Feldbestand oder die geometrischen Verhältnisse des den Feldbestand aufweisenden Feldes handeln. Das Umfeldsensorsystem kann dabei insbesondere Umfeldsensoren in Form von bildgebenden Sensoren wie Kamerasensoren und/oder Lasersensoren und/oder Radarsensoren aufweisen.

Als problematisch bei der bekannten Arbeitsmaschine hat sich jedoch herausgestellt, dass rein bildgebende Umfeldsensoren systematische Probleme mit beispielsweise Staub und/oder der Belichtung aufweisen, sodass eine Erkennung des Vorfelds nicht oder lediglich in unzureichender Qualität ermöglicht ist.

Weiterhin wird beispielhaft auf die europäische Patentanmeldung EP 3 097 759 A1 verwiesen, die ein Verfahren zur Ansteuerung einer selbstfahrenden Arbeitsmaschine betrifft, welches ebenfalls mit mehreren Arbeitsorganen ausgestattet ist. Das Verfahren soll eine Fahrgeschwindigkeit der Arbeitsmaschine optimal auf das abzuerntende Feld einstellen können. Hierzu umfasst die Arbeitsmaschine ein Steuersystem, welches Informationen zu dem Feldbestand einerseits aus offline erzeugten georeferenzierten Prognose-Bestandsinformationen sowie andererseits aus online erzeugten georeferenziertes Ist-Bestandsinformationen erhält. Die Kombination der beiden Informationen soll die Nachteile einer Nutzung ausschließlich der offline erzeugten Prognose-Bestandsinformationen ausgleichen. Letztere ermöglichen zwar eine vorausschauende Ansteuerung, allerdings reichen diese aufgrund eines Zeitversatzes zwischen der Erzeugung und der Durchführung des Ernteprozesses alleine nicht aus. Ein entsprechende Prognose-Bestandsmodell kann dabei auf Luftaufnahmen, insbesondere Satellitenaufnahmen und/oder Drohnenaufnahme, basieren. Die online erzeugten Ist-Bestandsinformationen können in Form von Ertragsinformationen vorliegen, die mittels einer Sensoranordnung, vorzugsweise eines Korndurchsatzsensor oder eines Schichthöhensensors in einem Einzugskanal der Arbeitsmaschine, ermittelt wurden.

Die EP 3 530 098 A1 beschreibt ein Verfahren zur Ermittlung einer Bestandsdichte eines abzuerntenden Feldbestands. Hierzu umfasst die Arbeitsmaschine eine Sensoranordnung zur Aussendung und zum Empfangen elektromagnetischer Sendestrahlen, wobei die Sensoranordnung beispielsweise aus einem Laserscanner gebildet sein kann. Vorteil des Verfahrens soll es sein, dass beim Aussenden eines Sendepulses unterschiedliche Teilstrahlen erzeugt werden, sodass hintereinanderliegende Pflanzen des Feldbestands die elektromagnetischen Strahlen reflektieren. Auf diese Weise soll die Bestandsdichte einfach und schnell bestimmbar sein.

Aus der europäischen Patentanmeldung EP 722 269 A1 geht eine Arbeitsmaschine mit mehreren Arbeitsorganen und einem Umfeldsensorsystem zur Erfassung mindestens einer den Ernteprozess betreffenden Information hervor. Weiterhin weist die Arbeitsmaschine ein Systemmodell sowie eine Rechenvorrichtung auf, wobei letztere basierend auf dem Systemmodell die Maschinenparameter für die Arbeitsorgane ermittelt. Die Ermittlung erfolgt dabei in Abhängigkeit der von dem Umfeldsensorsystem ermittelten Informationen. Bei den ermittelten Informationen kann es sich um den Feldbestand oder geometrische Verhältnisse des den Feldbestand aufweisenden Felds handeln, die mittels Sensoren des Umfeldsensorsystems ermittelt wurden.

Als problematisch bei bekannten Verfahren zur Ansteuerung von selbstfahrenden Arbeitsmaschinen hat sich jedoch herausgestellt, dass eine Bestimmung der Maschinenparameter trotz der erfassten Informationen betreffend das Vorfeld der landwirtschaftlichen Arbeitsmaschine nicht immer zuverlässig erfolgt.

Der vorliegenden Anmeldung liegt die Aufgabe zugrunde, ein Verfahren zur Ansteuerung einer selbstfahrenden Arbeitsmaschine bereitzustellen, das die Probleme aus dem Stand der Technik behebt.

Die zugrunde liegende Aufgabe wird erfindungsgemäß mittels des Verfahrens mit den Merkmalen des Anspruchs 1 gelöst. Vorteilhafte Ausgestaltungen ergeben sich aus den zugehörigen Unteransprüchen.

Das Verfahren ist durch die folgenden Verfahrensschritte gekennzeichnet:

In einem ersten Schritt wird eine erste Vorfeldinformation des geografischen Vorfelds bestimmt. Hierzu wird der mindestens eine Sensor des Vorfelderfassungssystems genutzt. Der Sensor kann dabei vorzugsweise frontseitig an der selbstfahrenden landwirtschaftlichen Arbeitsmaschine, insbesondere frontseitig an einer Fahrerkabine der Arbeitsmaschine, angeordnet sein. Vorzugsweise kann allerdings auch vorgesehen sein, dass das Vorfelderfassungssystem eine Mehrzahl von Sensoren umfasst, um das geografische Vorfeld der Arbeitsmaschine zu scannen.

In einem zweiten Schritt wird die erfasste erste Vorfeldinformation an das Steuersystem der selbstfahrenden Arbeitsmaschine übermittelt. Hierbei kann vorzugsweise vorgesehen sein, dass das Steuersystem neben einer Recheneinheit auch einen Speicher zur zumindest vorübergehenden Speicherung der von dem Vorfelderfassungssystem erfassten Informationen aufweist, sodass die Vorfeldinformation zunächst an den Speicher übermittelt wird, bevor sie von der Recheneinheit abgerufen wird. Ebenso kann vorgesehen sein, dass die Vorfeldinformation unmittelbar an die Recheneinheit des Steuersystems übermittelt wird.

In einem dritten Schritt wird eine zweite Vorfeldinformation an das Steuersystem übermittelt. Bei der zweiten Vorfeldinformation handelt es sich um eine Information, die aus einer Biomasseprognosekarte entnommen wurde. Bei der Biomasseprognosekarte handelt es sich um eine Karte mit Informationen zu der voraussichtlich zur Verfügung stehenden, von der Arbeitsmaschine aufzunehmenden Biomasse. Als "Biomasse" wird im Sinne der vorliegenden Erfindung die bei dem Ernteprozess zur Verfügung stehende abzuerntende Menge an Erntegut verstanden. Die Biomasse kann dabei als absolute Angabe, beispielsweise in Tonnen pro Hektar (t/ha), oder aber auch als relative Verteilung angegeben werden. Hierzu zählen insbesondere auf dem Feld aufstehende, abzuerntende Pflanzen. Neben der Biomasse kann die Biomasseprognosekarte jedoch auch weitere Informationen betreffend das abzuerntende Feld, insbesondere eine Abreife des Feldbestands sowie einzelne Feldzonen, enthalten.

Die Biomasseprognosekarte ist dabei zumindest zum Teil offline, also zeitlich versetzt zu dem jeweils laufenden Ernteprozess, erzeugt worden. Bei der von dem Sensor erfassten Information handelt es sich hingegen um georeferenzierte Informationen zu dem in Rede stehenden Feld, die online an der Arbeitsmaschine erzeugt werden.

Die Biomasseprognosekarte kann insbesondere auch GPS-basiert sein, d.h. in Abhängigkeit eines Aufenthaltsorts der landwirtschaftlichen Arbeitsmaschine, Informationen betreffend das geografische Vorfeld der landwirtschaftlichen Arbeitsmaschine bereitstellen.

Die Biomasseprognosekarte kann dabei auf Basis von verschiedenen Informationen erzeugt worden sein. Zur Erstellung der Biomasseprognosekarte können Wachstumsmodelle und statistische Modelle, insbesondere unter Verwendung von künstlicher Intelligenz, verwendet werden. Darüber hinaus können Vegetationsindizes und Kanäle genutzt werden. Die Biomasseprognosekarte erhält dabei für eine Vielzahl von Bezugspunkten auf dem abzuerntenden Feld Informationen zu einem voraussichtlichen Bestand des abzuerntenden Felds. Insbesondere kann vorgesehen sein, dass die Biomasseprognosekarte aus einer matrixartigen Anordnung von Pixeln gebildet ist, wobei jedem Pixel eine oder mehrere Informationen betreffend das abzuerntende Feld zugeordnet sind.

In einem vierten Schritt wird zumindest für die erste und/oder die zweite Vorfeldinformation, die an das Steuersystem übermittelt wurde bzw. wurden, eine Prognosegüte bestimmt.

Als "Prognosegüte" einer Vorfeldinformation wird im Sinne der vorliegenden Erfindung ein Maß für eine Genauigkeit der Vorfeldinformation verstanden. Insbesondere wird hierunter eine Übereinstimmung der Vorfeldinformation mit den das abzuerntende Feld betreffenden tatsächlichen Gegebenheiten verstanden. Mit anderen Worten gibt die Prognosegüte an, wie gut die von dem Vorfelderfassungssystem erfassten Vorfeldinformation mit der Realität übereinstimmt.

Beispielsweise kann vorgesehen sein, dass die Biomasseprognosekarte auf Satellitenbildern des abzuerntenden Felds basiert. Es hat sich jedoch herausgestellt, dass verschiedene Faktoren dazu führen können, dass ein von dem abzuerntenden Feld aufgenommenes Satellitenbild ungenau ist. Beispielsweise kann das abzuerntende Feld zumindest teilweise in einem Schattenbereich, beispielsweise aufgrund eines angrenzenden Waldstücks oder aufgrund großflächiger Gegenstände, wie beispielsweise großer Gebäudekomplexe, liegen. In einem solchen Fall kann eine zuverlässige Aufnahme zumindest des in dem Schattenbereich angeordneten Teils des abzuerntenden Felds nicht sichergestellt werden. Als Folge sind die entsprechenden in der Biomasseprognosekarte enthaltenen Informationen zumindest teilweise unzuverlässig und bilden nicht die Realität ab.

Darüber hinaus liegt eine weitere Fehlerquelle in der Datenübertragung der von dem Satelliten erfassten Informationen an eine auf der Erde angeordnete Datenverarbeitungseinrichtung und der verarbeiteten Informationen von einer Datenübertragungseinheit an die landwirtschaftliche Arbeitsmaschine.

Es versteht sich, dass der Maschinenparameter in den vorgenannten Fällen nicht oder nicht nur unter Berücksichtigung der fehlerhafteten Vorfeldinformation erfolgen sollte.

Aus diesem Grund sieht das Verfahren als weiteren Verfahrensschritt vor, dass der Maschinenparameter zur Ansteuerung des Fahrantriebs und/oder des Arbeitsorgans der selbstfahrenden Arbeitsmaschine in Abhängigkeit zumindest der ersten und der zweiten Vorfeldinformation von der Recheneinheit des Steuersystems bestimmt wird, wobei jedoch eine Prognosegüte der jeweiligen Vorfeldinformation berücksichtigt wird.

Bei Nutzung einer Mehrzahl von Sensoren ist denkbar, dass für jede Vorfeldinformation eine Prognosegüte bestimmt wird, wobei die Bestimmung des Maschinenparameters zusätzlich in Abhängigkeit jeder Vorfeldinformation unter Berücksichtigung der zugehörigen Prognosegüten erfolgt. Auf diese Weise wird vorzugsweise jeder der erfassten Vorfeldinformationen eine Prognosegüte zugeordnet, sodass ein Einfluss, d.h. eine Gewichtung, der jeweiligen Vorfeldinformation bei der Bestimmung des Maschinenparameters entsprechend angepasst werden kann.

Das erfindungsgemäße Verfahren hat viele Vorteile. Insbesondere ermöglicht das Verfahren eine gegenüber dem Stand der Technik verbesserte Bestimmung eines Maschinenparameters für die Arbeitsmaschine und/oder deren Arbeitsorgane. Dies liegt insbesondere darin begründet, dass die bei der Bestimmung des Maschinenparameters einfließenden Vorfeldinformationen nicht ungeprüft verwendet werden. Vielmehr erfolgt eine vorige Qualitätskontrolle der Vorfeldinformationen über die Prognosegüte.

Dabei kann vorgesehen sein, dass die Bestimmung der Prognosegüte mittels eines Vergleichs der von dem Vorfelderfassungssystem erfassten, prognostizierten Informationen zum Vorfeld mit bei dem Ernteprozess tatsächlich gemessenen Informationen zum Vorfeld erfolgt. So kann beispielsweise vorgesehen sein, dass die landwirtschaftliche Arbeitsmaschine Sensoren aufweist, die unter anderem den Erntegutdurchsatz unmittelbar an der Arbeitsmaschine bestimmen. Aus einem Vergleich mit den erfassten Daten zum Erntegutdurchsatz mit den als erste und/oder zweite Vorfeldinformation bereitgestellten Daten kann mithin eine jeweilige Prognosegüte bestimmt und bei der Bestimmung des Maschinenparameters berücksichtigt werden.

Ebenso kann jedoch auch vorgesehen sein, dass die Prognosegüte ohne einen Vergleich erfolgt. Vielmehr kann in einem solchen Fall vorgesehen sein, dass die Prognosegüte aufgrund von Vorwissen angepasst wird. Dies kann beispielsweise dann der Fall sein, wenn es sich bei dem Vorfeld um einen Feldrandbereich handelt. Ebenso kann bekannt sein, dass ausgewählte Satellitendaten aufgrund eines ungünstigen Aufnahmezeitpunkts - insbesondere bei Vorliegen einer Bewölkung - eine unzureichende Qualität aufweisen. In den vorgenannten Fällen kann die Prognosegüte der jeweiligen Vorfeldinformation deshalb bereits ohne eine weitere Messung angepasst werden.

Gemäß einer weiteren vorzugsweisen Ausgestaltung der Erfindung ist vorgesehen, dass es sich bei der ersten Vorfeldinformation um eine Bestandsdichte, eine Schnitthöhe, eine Bestandshöhe und/oder eine Teilbreite des geografischen Vorfelds der Arbeitsmaschine handelt.

Die aktuelle "Schnitthöhe" ist dabei typischerweise - sofern die Arbeitsmaschine als Mähdrehscher ausgebildet ist - abhängig von einem Arbeitspunkt eines Schneidwerks der Arbeitsmaschine. Darüber hinaus hängt die Schnitthöhe von einer eingestellten Stoppelhöhe ab.

Im Sinne der vorliegenden Erfindung wird unter einer "aktuellen Teilbreite" eine tatsächliche Auslastung einer Arbeitsbreite eines Vorsatzgeräts der selbstfahrenden Arbeitsmaschine verstanden, wobei unter einer "Arbeitsbreite" wiederum eine zu einem bestimmten Zeitraum während des Ernteprozesses genutzte Breite des Vorsatzgeräts verstanden wird. Als "Arbeitsbreite" kann mit anderen Worten die gesamte zur Bearbeitung des abzuerntenden Felds zur Verfügung stehende Breite des Vorsatzgeräts verstanden werden. Beispielsweise kann vorgesehen sein, dass die Arbeitsmaschine das Feld abfährt, wobei eine Breite des abzuerntenden Abschnitts des Felds eine Arbeitsbreite des Vorsatzgeräts unterschreitet, sodass eine Bearbeitung des Felds - bei Nutzung der gesamten Breite des Vorsatzgeräts - eine Bearbeitung eines nicht zum abzuerntenden Feld gehörenden Teils zur Folge hätte. In einem solchen Fall wird lediglich ein "Teil" der Arbeitsbreite des Vorsatzgeräts genutzt, dieser Teil wird im Sinne der vorliegenden Erfindung als "aktuelle Teilbreite" bezeichnet.

Daneben ist auch vorstellbar, dass die Bestandhöhe des abzuerntenden Felds nicht mittels des Sensors, sondern durch eine dem Steuersystem zugeführte Höhendifferenzkarte oder eine Topologiekarte bestimmt wird. Die Höhendifferenzkarte kann dabei auf Informationen basieren, die mittels einer Drohne, eines Flugzeugs oder eines Satellits ermittelt wurden.

Es kann vorgesehen sein, dass die vorgenannten Vorfeldinformationen mittels eines einzigen Sensors, der dem Vorfelderfassungssystem zugeordnet ist, erfasst werden. Ebenso kann jedoch auch vorgesehen sein, dass das Vorfelderfassungssystem eine Mehrzahl von Sensoren umfasst, wobei jeder der Sensoren eine andere Vorfeldinformation erfasst.

Gemäß einer vorzugsweisen Ausgestaltung der Erfindung ist vorgesehen, dass das Vorfelderfassungssystem eine dritte Vorfeldinformation erfasst, wobei die dritte Vorfeldinformation und deren Prognosegüte ebenfalls bei der Bestimmung des Maschinenparameters berücksichtigt werden. Die dritte Vorfeldinformation kann dabei ebenfalls mittels des Sensors des Vorfelderfassungssystem erfasst werden. Ebenso kann jedoch auch vorgesehen sein, dass die dritte Vorfeldinformation einer anderen Quelle entstammt, beispielsweise einer Topologiekarte des abzuerntenden Felds.

Bei der dritten Vorfeldinformation kann es sich - analog zu der ersten Vorfeldinformation - um die Bestandsdichte, die Schnitthöhe, die Bestandshöhe und/oder die Teilbreite des geografischen Vorfelds der Arbeitsmaschine handeln.

Es ist gemäß einer vorzugsweisen Ausgestaltung der Erfindung vorgesehen, dass eine Gewichtung der ersten und/oder der zweiten Vorfeldinformation bei der Bestimmung des Maschinenparameters erfolgt. Da die erste und die zweite Vorfeldinformation bei der Bestimmung des Maschinenparameters berücksichtigt werden, kann vorgesehen sein, dass die erste und die zweite Vorfeldinformation in unterschiedlichen Maßen berücksichtigt werden. Der Einfluss der ersten und der zweiten Vorfeldinformation kann mithin gewichtet werden. So kann beispielhaft vorgesehen sein, dass die erste als auch die zweite Vorfeldinformation gleichermaßen bei der Bestimmung des Maschinenparameters berücksichtigt werden. Ebenso kann vorgesehen sein, dass entweder die erste oder die zweite Vorfeldinformation stärker bei der Bestimmung berücksichtigt wird.

Dabei kann die Gewichtung der ersten Vorfeldinformation gemäß einer vorzugsweisen Ausgestaltung der Erfindung bei Vorliegen einer geringen Prognosegüte der ersten Vorfeldinformation bei der Bestimmung des Maschinenparameters gegenüber der Gewichtung der zweiten Vorfeldinformation verringert werden. Sofern die Prognosegüte für die erste Vorfeldinformation mithin gering ausfällt, d.h. die erste Vorfeldinformation einen schlechten Indikator für die Gegebenheiten des abzuerntenden Felds darstellt, kann also vorgesehen sein, dass die erste Vorfeldinformation weniger stark bei der Bestimmung des Maschinenparameters berücksichtigt wird als die zweite und/oder eine weitere Vorfeldinformation.

Ein derartiger Fall kann beispielhaft dann auftreten, wenn dem Vorfelderfassungssystem eine Vielzahl von Sensoren zugeordnet ist und ein Vergleich aus den entsprechend ermittelten Informationen betreffend das geographische Vorfeld ergibt, dass das Vorfelderfassungssystem für den infrage stehenden Abschnitt des abzuerntenden Felds keine zuverlässigen Informationen liefern kann. In einem solchen Fall kann vorgesehen sein, dass der zweiten Vorfeldinformation, die aus der Biomasseprognosekarte stammt, eine höhere Bedeutung beigemessen wird.

Gleichermaßen kann gemäß einer vorteilhaften Ausgestaltung der Erfindung vorgesehen sein, dass die Gewichtung der zweiten Vorfeldinformation bei Vorliegen einer geringen Prognosegüte der zweiten Vorfeldinformation bei der Bestimmung des Maschinenparameters gegenüber der Gewichtung der ersten Vorfeldinformation verringert wird. Die von dem Sensor des Vorfelderfassungssystems erfassten Informationen betreffend das geographische Vorfeld der landwirtschaftlichen Arbeitsmaschine sind typischerweise weniger fehleranfällig, sodass dieser Fall besonders bevorzugt sein kann.

Vorzugsweise kann weiter vorgesehen sein, dass die Gewichtung der von den Sensoren ermittelten Informationen bei der Bestimmung weniger stark gewichtet wird als die Informationen aus der Biomasseprognosekarte, sofern eine Zahl und die Art der Sensoren vermuten lässt, dass die Vorfeldinformationen eine reduzierte Qualität aufweisen. Dies ist insbesondere dann der Fall, wenn ein Vergleich mit den tatsächlichen Gegebenheiten ergibt, dass die von den Sensoren ermittelten Informationen ungenau oder unzutreffend sind.

Aus diesem Grund sieht eine weitere vorzugsweise Ausgestaltung der Erfindung vor, dass der selbstfahrenden landwirtschaftlichen Arbeitsmaschine mindestens ein Sensor zur Erfassung von Ist-Bestandsinformationen hinsichtlich des abzuerntenden Felds zugeordnet ist. Bei den Sensoren kann es sich beispielhaft um einen Korndurchsatzsensor oder einen Volumenstromsensor, insbesondere einen Schichthöhensensor in einem Einzugskanal der Arbeitsmaschine, handeln, die jeweils live, d.h. in Echtzeit, während des Ernteprozesses Ist-Informationen zu dem abzuerntenden Feld erfassen. Die Bestimmung der jeweiligen Prognosegüte kann dann vorzugsweise mittels eines Vergleichs zwischen den Ist-Bestandsinformationen und der zugehörigen Vorfeldinformation erfolgt.

Eine vorzugsweise Ausgestaltung der Erfindung sieht vor, dass der Sensor als LiDAR-Sensor ausgebildet ist. Als LiDAR-Sensor wird ein Sensor verstanden, der mittels einer Aussendung von Lichtwellen Abstände und Geschwindigkeiten von Zielobjekten bestimmen kann. Er arbeitet mithin nach demselben Prinzip wie ein Radar, unterscheidet sich jedoch in der Frequenz der ausgesandten Lichtwellen. Mittels eines LiDAR-Sensors lassen sich Information betreffend das geografische Vorfeld der landwirtschaftlichen Arbeitsmaschine, insbesondere die Teilbreite sowie die Bestandshöhe des abzuerntenden Felds, zuverlässig bestimmen. Mittels des LiDAR-Sensors lässt sich jedoch auch ein Anteil an Lagergetreide, d.h. umgeknicktes Getreide, dessen Ernte erschwert ist, erkennen.

Gemäß einer vorzugsweisen Ausgestaltung der Erfindung ist der Sensor als Kamera, vorzugsweise als Stereo-Kamera, ausgebildet. Die Kamera kann dabei vorzugsweise an einer Fahrerkabine der landwirtschaftlichen Arbeitsmaschine angeordnet sein. Die Kamera kann dazu genutzt werden, die Bestandshöhe, die Bestandsdichte, die Teilbreite, den Anteil an Lagergetreide, Unkraut sowie einen Grad der Abreife des abzuerntenden Felds zu erkennen und diese Informationen als Vorfeldinformationen an das Steuersystem zu übermitteln.

Gemäß einer vorteilhaften Ausgestaltung der Erfindung ist vorgesehen, dass das Vorfelderfassungssystem zwei Sensoren aufweist, wobei ein erster Sensor als LiDAR-Sensor ausgebildet ist, während ein zweiter Sensor als Kamera ausgebildet ist, wobei der erste Sensor die erste Vorfeldinformation erfasst, während der zweite Sensor die dritte Vorfeldinformation erfasst. In Versuchen hat sich herausgestellt, dass eine Kombination der zwei vorgenannten Sensoren besonders dazu geeignet ist, das geografische Vorfeld der landwirtschaftlichen Arbeitsmaschine in besonders zuverlässiger Weise zu bestimmen. Jeder der Sensoren erfasst dabei eine Vorfeldinformation betreffend das geografische Vorfeld der landwirtschaftlichen Arbeitsmaschine und übermittelt diese vorzugsweise an das Steuersystem, welches die beiden Vorfeldinformationen zusammen mit der zweiten Vorfeldinformation zu einem Maschinenparameter verarbeitet.

Eine vorteilhafte Ausgestaltung der Erfindung sieht vor, dass die Biomasseprognosekarte auf Satellitenbildern des abzuerntenden Felds basiert. Dabei kann vorzugsweise vorgesehen sein, dass eine Positionskorrektur der aufgenommenen Satellitenbilder erfolgt, bevor diese zur Erstellung der Biomasseprognosekarte herangezogen werden. Auch ist denkbar, dass Bilder verschiedener Satelliten genutzt werden, um eine Genauigkeit der Satellitenbilder zu verbessern.

Vorzugsweise ist vorgesehen, dass die Satellitenbilder des abzuerntenden Felds in einem Wellenlängenbereich von etwa 380 nm bis 3000 nm, vorzugsweise von etwa 400 nm bis 900 nm, aufgenommen werden. Weiterhin kann es bevorzugt sein, wenn der jeweilige Satellit mehrere Spektralbänder detektiert, vorzugsweise 5 bis 15 Spektralbänder.

Vorzugsweise kann weiter vorgesehen sein, dass eine räumliche Auflösung jedes Satellitenbilds in einem Bereich von 2 m bis 20 m, vorzugsweise 3 m bis 10 m, liegt. Ebenso kann jedoch auch vorgesehen sein, Satellitenbilder mit einer kleineren Auflösung, vorzugsweise im Bereich von 0,3 m bis 2 m, zu wählen, welche jedoch in aller Regel vergleichsweise hohen Beschaffungskosten unterliegen. Auch kann vorgesehen sein, dass das Satellitenbild des abzuerntenden Felds in zeitlichen Abständen von Stunden bis zu mehreren Tagen wiederholt aufgenommen wird, um die hieraus abgeleitete Biomasseprognosekarte kontinuierlich anpassen zu können.

Beispielhaft können die unter der Raumfahrtmission Sentinel-2 zusammengefassten Satelliten, Sentinel-2A und Sentinel-2B, als Satelliten zur Erstellung der Satellitenbilder herangezogen werden. Bei diesen Satelliten handelt es sich um ein Paar optischer Erdbeobachtungssatelliten in einem sonnensynchronen Erdorbit. Alternativ oder zusätzlich können auch Satellitenbilder von Zusammenschlüssen von Satelliten genutzt werden, beispielhaft des Zusammenschlusses "PlanetScope". Insbesondere für den Fall, dass Schwankungen bei der Bestimmung des Bestands auftreten, kann das Hinzuziehen von Satellitenbildern verschiedener Satelliten besonders bevorzugt sein.

Ebenso kann jedoch auch vorgesehen sein, dass die Biomasseprognosekarte auf Drohnenaufnahmen und/oder auf Aufnahmen mittels Radarfernerkundung basiert, wobei die Aufnahmen in bekannter Weise von dem abzuerntenden Feld erstellt wurden.

Eine besonders vorteilhafte Weiterentwicklung des erfindungsgemäßen Verfahrens sieht vor, dass die Biomasseprognosekarte in Abhängigkeit einer Reflexion des Sonnenlichts der auf dem Feld befindlichen Pflanzen bestimmt wird, wobei hierzu ein normierter differenzierter Vegetationsindex (NDVI) bestimmt wird. Der normierte differenzierte Vegetationsindex sieht vor, dass ein Teil des an den auf dem abzuerntenden Feld aufstehenden Pflanzen reflektierten Teils des Sonnenlichts gemessen wird, insbesondere im Infrarot-Bereich des Spektrums, welcher bei einer Wellenlänge von 780 nm beginnt. Vorzugsweise kann dabei vorgesehen sein, lediglich im Nahen Infrarot-Bereich (NIR) zu messen, d.h. bis zu einer Wellenlänge von 2500 nm. Zugleich kann die Reflexion des Teils des Sonnenlichts gemessen werden, welcher im roten, sichtbaren Bereich liegt, welcher in etwa einem Wellenlängenbereich von 625 nm bis 780 nm entspricht.

Der vorgenannte normierte differenzierte Vegetationsindex (NDVI) lässt sich sodann wie folgt bestimmen:

$$NDVI = \frac{NIR\text{-}Rot}{NIR\text{+}Rot}$$

Dabei stellt "NIR" den im Infrarot-Bereich gemessenen Wert der Reflexion dar, während "Rot" den Wert des im roten, sichtbaren Teil des Spektrums gemessenen Teil des Sonnenlichts darstellt.

Die gemessenen Werte lassen sich schließlich in eine Biomasseprognosekarte umwandeln, wobei ein hoher Wert des NDVI auf eine hohe photosynthetische Aktivität schließen lässt, während ein niedriger Wert des NDVI auf eine niedrige photosynthetische Aktivität schließen lässt, welche wiederum auf kranke oder tote Vegetation, auf Steine oder auf Ackerboden hinweist. Die mittels Werte des normierten differenzierten Vegetationsindex erzeugte Biomasseprognosekarte gibt mithin einen zuverlässigen Überblick über die zur Verfügung stehende Biomasse.

Vorzugsweise kann es sich bei der zweiten Vorfeldinformation um einen Wert des Vegetationsindex handeln. Mithin kann vorgesehen sein, dass neben der mittels des Sensors bestimmten ersten Vorfeldinformation der landwirtschaftlichen Arbeitsmaschine ein Wert des NDVI, der ein Maß für die photosynthetische Aktivität darstellt, bei der Bestimmung des Maschinenparameters herangezogen wird. Eine Kombination dieser beiden Vorfeldinformationen hat sich als besonders vorteilhaft erwiesen.

Vorzugsweise kann es sich bei der zweiten Vorfeldinformation um einen gewichteten Mittelwert eines Segments des Vorfelds des Vegetationsindex handeln. Beispielhaft ist vorstellbar, dass der Vegetationsindex für einen relevanten Messbereich, auch "region of interest" genannt, bestimmt wird. Der relevante Messbereich kann wiederum in eine Vielzahl von Segmenten unterteilt werden. Vorzugsweise liegt der relevante Messbereich in dem Vorfeld der landwirtschaftlichen Arbeitsmaschine.

Dabei kann vorgesehen sein, dass der Vegetationsindex als gewichteter Mittelwert für mehrere relevante Messbereiche bestimmt wird, wobei sich die relevanten Messbereiche als streifenartige Bereiche einstellen. Beispielhaft kann vorgesehen sein, dass drei, in verschiedenen Abständen von einem Messerbalken der Arbeitsmaschine angeordnete relevante Messbereiche herangezogen werden, die jeweils in mehrere Segmente unterteilt werden. Ein Segment ist dabei größer als eine Auflösung des zugehörigen Satellitenbilds, sodass für jedes Segment eine gewichtete Mittelung des entsprechenden Vegetationsindex erfolgen kann.

Eine weitere Ausgestaltung der Erfindung sieht vor, dass es sich bei dem Maschinenparameter um eine Fahrgeschwindigkeit der landwirtschaftlichen Arbeitsmaschine handelt. Ebenso kann insbesondere vorgesehen sein, dass es sich bei dem Maschinenparameter um einen Parameter zur Einstellung eines Vorfahrtreglers der selbstfahrenden Arbeitsmaschine, der eine Einstellung der Fahrgeschwindigkeit ermöglicht, handelt.

Die eingangs genannte Aufgabe wird ferner durch eine selbstfahrende landwirtschaftliche Arbeitsmaschine gemäß Anspruch 14 gelöst. Die in Bezug auf das erfindungsgemäße Verfahren genannten Vorteile gelten dabei analog für die erfindungsgemäße landwirtschaftliche Arbeitsmaschine. Die erfindungsgemäße selbstfahrende landwirtschaftliche Arbeitsmaschine kann als selbstfahrender Feldhäcksler oder als selbstfahrender Mähdrescher für den landwirtschaftlichen Einsatz auf einem landwirtschaftlichen Feld ausgebildet sein.

Die Erfindung ist nachstehend anhand eines Ausführungsbeispiels, das in den Figuren dargestellt ist, näher erläutert. Es zeigt:

Fig. 1: Eine Schnittdarstellung einer erfindungsgemäßen selbstfahrenden landwirtschaftlichen Arbeitsmaschine.

Fig. 2: Eine schematische Darstellung einer Übertragung von einem Satelliten erfassten Daten an die Arbeitsmaschine.

Fig. 3: Eine Draufsicht auf die erfindungsgemäße landwirtschaftliche Arbeitsmaschine aus Figur 1.

Fig. 4: Eine schematische Ansicht zweier Sensoren eines Vorfelderfassungssystems der landwirtschaftlichen Arbeitsmaschine aus Figur 1.

Fig. 5: Wie Figur 4, in einer alternativen Ausgestaltung des Vorfelderfassungssystems.

Fig. 6: Wie Figur 4, in einer weiteren alternativen Ausgestaltung des Vorfelderfassungssystems.

Fig. 7: Eine schematische Darstellung eines Datenaustauschs zwischen einer Mehrzahl erfindungsgemäßer Arbeitsmaschinen.

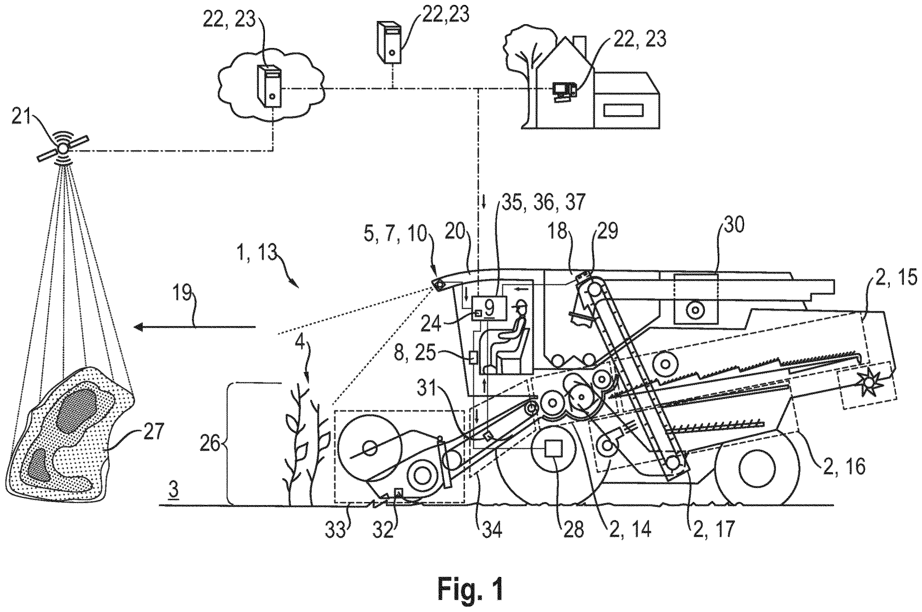

Eine erfindungsgemäße landwirtschaftliche Arbeitsmaschine **1** ist in den **Figuren 1 bis 7** gezeigt. Die Arbeitsmaschine **1** ist in Form eines Mähdrehschers **13** ausgebildet. Der selbstfahrende Mähdrescher **13** weist mehrere Arbeitsorgane **2** zum Aufnehmen, Bearbeiten und Weiterleiten von Erntegut **4** eines abzuerntenden Felds **3** auf.

So weist der Mähdrescher **13** ein Dreschwerk **14** zum Dreschen von aufgenommenem Erntegut **4** zu Korngut auf. Unter dem Erntegut **4** ist dabei das gesamte vom abzuerntenden Feld **3** aufgenommene und dem Dreschwerk **14** zugeführte Material zu verstehen, wobei das Korngut dann die von dem Mähdrescher **13** aus dem Erntegut **4** zu gewinnenden Körner bezeichnet.

Grundsätzlich dient das Dreschwerk **14** zum Ausreiben des überwiegenden Teils des Kornguts aus dem Stroh des Ernteguts **4** durch den Dreschvorgang. In dem als Abscheideanordnung **15** ausgestalteten Arbeitsorgan **2** wird dann das Erntegut **4** mit dem in ihm verbliebenen Kornanteil so bewegt, z.B. geschüttelt, dass auch das verbliebene Korngut möglichst aus dem Stroh und dem sonstigen Erntegut **4** herausgetrennt wird. Das im Dreschwerk **14** und der Abscheideanordnung **15** gewonnene Korngut wird dann dem als Reinigungsanordnung **16** ausgestalteten Arbeitsorgan **2** zugeführt. In der Reinigungsanordnung **16,** welche regelmäßig mehrstufig ist, werden dann noch bis hierher im Korngut mitgeführte Nichtkornbestandteile, z.B. Spreu und Strohteile, sowie unausgedroschenes Material, wie etwa Ährenspitzen oder Grannen, von dem Korngut getrennt. Anschließend gelangt das gereinigte Korngut über eine Transportanordnung **17,** z.B. einem Kornelevator, in einen Korntank **18.** Das ausgedroschene Stroh - also das verbliebene Erntegut **4** in der Abscheideanordnung **15** - wird von dem Mähdrescher **13** abgelegt, z.B. als Schwad entlang einer Fahrspur des Mähdreschers **13.**

Die vorgenannten Arbeitsorgane **2** werden über einen Antriebsmotor **30** angetrieben. Dieser Antriebsmotor **30** ist neben dem Antrieb der Arbeitsorgane **2** zum Vortrieb der selbstfahrenden landwirtschaftlichen Arbeitsmaschine **1** mit einer Fahrgeschwindigkeit in Richtung einer Fahrtrichtung **19** entlang des abzuerntenden Felds **3** ausgebildet. Der Antriebsmotor **30** kann mittels wenigstens einer und/oder mehrerer Kopplungsvorrichtungen mit den Arbeitsorgangen **2** zum Antrieb gekoppelt sein.

Die obigen Arbeitsorgane **2** können jeweils durch die Vorgabe verschiedener Maschinenparameter angesteuert werden. Ein obiges Dreschwerk **14** kann beispielsweise durch die Vorgabe verschiedener Dreschwerksparameterparameter angesteuert werden. Hierunter fallen in Abhängigkeit vom Aufbau des Dreschwerks **14** Antriebsparameter wie beispielsweise eine Trommeldrehzahl oder sonstige Bewegungskennzahlen der Dreschtrommel sowie eine Korbweite - also der Abstand zwischen der Dreschtrommel und einem Dreschkorb. Sofern das Dreschwerk **14** Entgrannerklappen aufweist, können auch diese im Rahmen der Ansteuerung des Dreschwerks **14** verstellt werden.

Es ist weiter ein Vorfelderfassungssystem **5** zur Erfassung von Informationen hinsichtlich eines geografischen Vorfelds **6** des selbstfahrenden Mähdreschers **13** vorgesehen. Das Vorfeld **6** des Mähdreschers **13** ist in einem vorwärtigen Bereich des Mähdreschers **13** gelegen. Das Vorfelderfassungssystem **5** weist wiederum einen Sensor **7** auf, der frontseitig an einer Fahrerkabine **20** des Mähdreschers **13** angeordnet ist. Der Sensor **7** ist in Form eines LiDAR-Sensors **10** ausgebildet und dazu vorgesehen, Informationen betreffend das geografische Vorfeld **6** des Mähdreschers **13** zu ermitteln. Der LiDAR-Sensor **10** ermittelt dabei die Bestandshöhe **26** sowie die Teilbreite **12** des abzuerntenden Felds **3**.

Darüber hinaus weist der Mähdrescher **13** ein Steuersystem **8** auf, welches wiederum mit einer Recheneinheit **9** in Verbindung steht. Die Recheneinheit **9** ist dabei dazu vorgesehen und eingerichtet, die von dem Vorfelderfassungssystem **5** erfassten Informationen zu einem Maschinenparameter zu verarbeiten. Bei dem Maschinenparameter handelt es sich im vorliegenden Fall um eine Fahrgeschwindigkeit, mithin um einen Parameter zur Ansteuerung des Fahrantriebs des Mähdreschers **13**. Dem Steuersystem **8** ist darüber hinaus eine nicht in den Figuren dargestellte Regeleinrichtung zugeordnet. Die Regeleinrichtung dient dazu, den von der Recheneinheit **9** ermittelten Maschinenparameter an einen Fahrantrieb **28** weiterzuleiten. Eine dem Fahrantrieb **28** zugeordnete Fahrgeschwindigkeitssteuerung **25**, welche Teil des Steuersystems **8** ist, ermöglicht sodann eine Ansteuerung des Fahrantriebs mit Vorgabe der ermittelten optimalen Fahrgeschwindigkeit.

Die Bestimmung des Maschinenparameters , d.h. einer einzustellenden Soll-Fahrgeschwindigkeit, erfolgt dabei wie folgt:

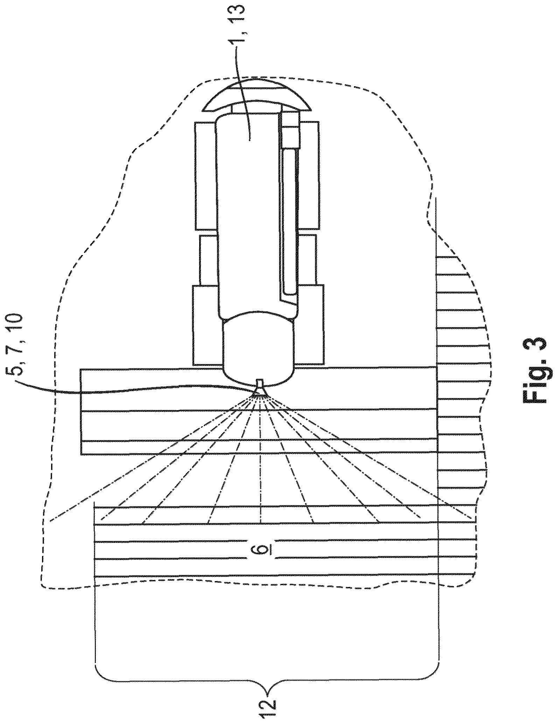

In einem ersten Schritt wird eine aktuelle Teilbreite **12** des Mähdreschers **13** mittels des LiDAR-Sensors **10** erfasst, wie aus **Figur 3** erkennbar ist. Die aktuelle Teilbreite **12** wird sodann in einem zweiten Schritt als eine erste Vorfeldinformation an das Steuersystem **8** übermittelt. Im gleichen Zug erfasst der LiDAR-Sensor **10** die aktuelle Schnitthöhe des abzuerntenden Felds **3** und übermittelt diese als dritte Vorfeldinformation an das Steuersystem **8**.

In einem dritten Schritt wird eine zweite Vorfeldinformation an das Steuersystem **8** übermittelt. Bei der zweiten Vorfeldinformation handelt es sich um eine Information, die einer Biomasseprognosekarte **27** entnommen wurde, welche schematisch in der **Figur 1** gezeigt ist. Bei der Information handelt es sich um einen Wert einer prognostizierten Biomasse in dem Vorfeld **6** des Mähdreschers **13**.

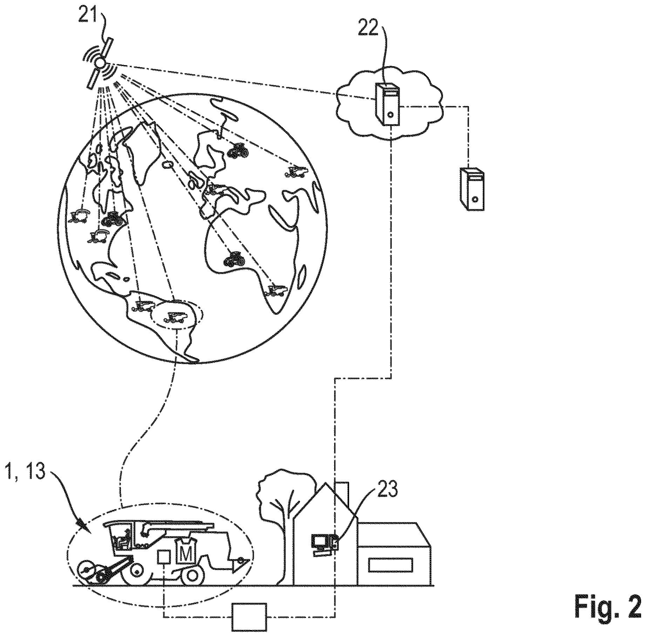

Die Biomasseprognosekarte **27** wurde dabei zeitlich vorangegangen auf Basis von Satellitenbildern des abzuerntenden Felds **3** erstellt, wie aus **Figur 2** erkennbar ist. Die aufgenommenen Satellitenbilder wurden mittels eines Satelliten **21** erstellt und an eine auf der Erde angeordnete Datenverarbeitungseinrichtung **22** übertragen, welche sodann eine Biomasseprognosekarte **27** erstellt hat. Diese wurde wiederum an eine Datenübertragungseinrichtung **23** übertragen, welche drahtlos an den Mähdrescher **13** übertragen wurde. Beispielhaft kann vorgesehen sein, dass die Biomasseprognosekarte **27** des abzuerntenden Felds **3** in einer Speichereinheit **24** der Recheneinheit **9** des Mähdreschers **13** abgelegt ist und von der Recheneinheit **9** abgerufen werden kann.

Für jede der Vorfeldinformationen wird in einem nächsten Schritt mittels der Recheneinheit **9** eine Prognosegüte, die in **Figur 1** mit den Bezugszeichen **35, 36, 37** am Ort ihrer Erfassung veranschaulicht sind, bestimmt. Die Ermittlung der Prognosegüte **35, 36, 37** erfolgt dabei mittels eines Vergleichs zwischen den von dem Vorfelderfassungssystem **5** erfassten bzw. aus der Biosmasseprognosekarte **27** entnommenen Vorfeldinformationen beispielsweise der Bestandsdichte, mit denjenigen Informationen zum Bestand, die mittels des dem Mähdrescher **13** zugeordneten Sensoren, beispielhaft mittels des Durchsatzsensors **31**, erfasst wurden. Die in den Figuren gezeigte Arbeitsmaschine **1** weist hierzu einen Ertragssensor **29**, den Durchsatzsensor **31** sowie einen Schnitthöhensensor **32** auf, wobei letzterer im Bereich eines Vorsatzes **33** der Arbeitsmaschine **1** angeordnet ist. Der Durchsatzsensor **31** ist im Bereich eines Schrägförderers **34** der Arbeitsmaschine **1** angeordnet, während der Ertragssensor **29** - entlang eines Förderwegs des Erntegut **4** innerhalb der Arbeitsmaschine **1** betrachtet - kurz vor Erreichen des Korntanks **18** angeordnet ist.

Hieraus lässt sich eine Prognose dafür abgeben, wie verlässlich die jeweiligen Vorfeldinformationen sind. Bei einer geringen Prognosegüte **35, 36, 37** wird eine Gewichtung der zugehörigen Vorfeldinformation verringert, sodass der Maschinenparameter nicht auf Grundlage von Falschinformationen erfolgt. Im Gegenzug kann der Einfluss der Vorfeldinformationen mit einer höheren Prognosegüte **35, 36, 37** vergrößert werden. Die Prognosegüte **35, 36, 37** gibt dabei eine prognostizierte Verlässlichkeit der jeweiligen Vorfeldinformation an, da lediglich ein Vergleich mit den Ist-Bestandsinformationen lediglich zu einem Ist-Zeitpunkt erfolgen kann, da die Ist-Informationen live, d.h. in Echtzeit, während des Ernteprozesses erfasst werden.

Aus der ersten Vorfeldinformation, der zweiten Vorfeldinformation und der dritten Vorfeldinformation wird in einem nächsten Schritt unter Berücksichtigung der jeweiligen Gewichtung ein voraussichtlicher Erntegutdurchsatz bestimmt. Auf Basis der prognostizierten Erntegutdurchsatzes wird sodann der Maschinenparameter mittels der Recheneinheit **9** für das Steuersystem **8** bestimmt. Dieser wird anschließend von der Regeleinrichtung an die Fahrgeschwindigkeitssteuerung **25** übertragen und zur Steuerung des Fahrantriebs genutzt. Die Fahrgeschwindigkeit des Mähdreschers **13** kann auf diese Weise optimal auf das abzuerntende Feld **3** und das zur Verfügung stehende Erntegut **4** angepasst werden.

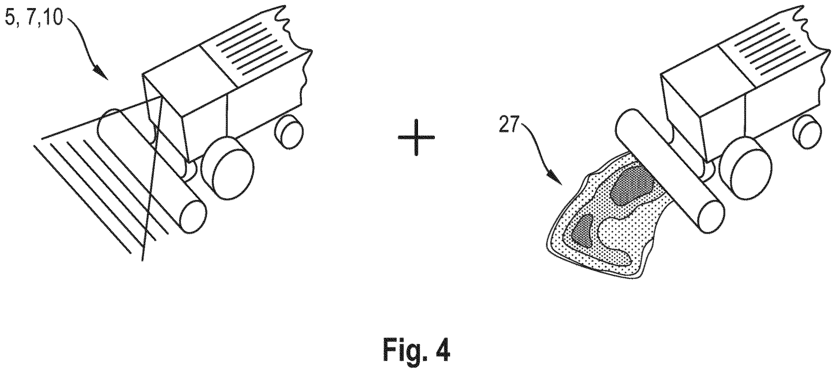

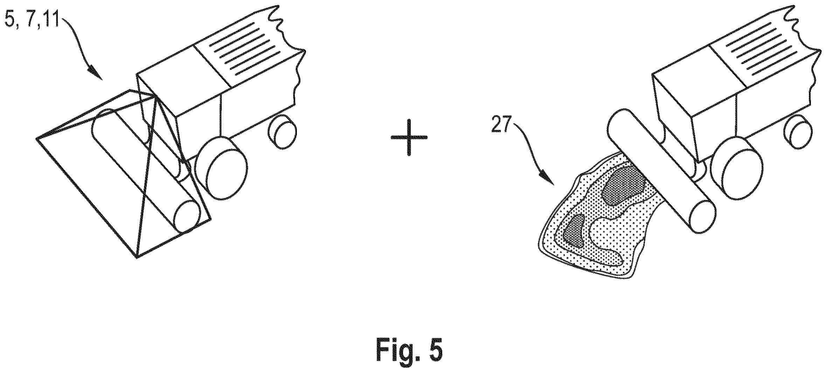

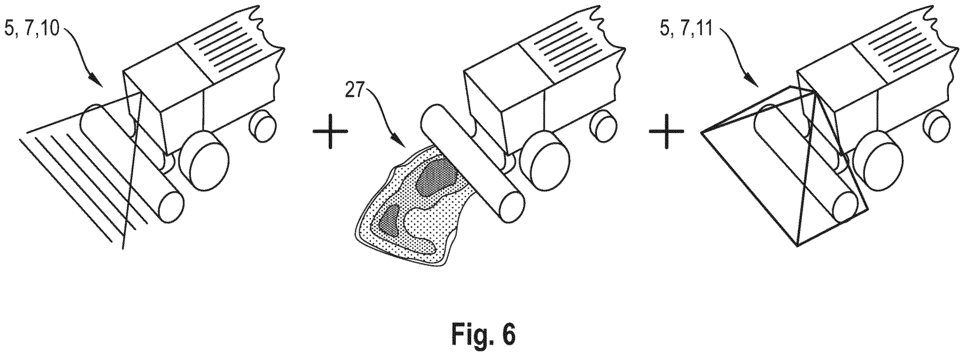

Die **Figur 4** zeigt wie auch die **Figuren 5 und 6** schematisch die bei der Ermittlung des Erntegutdurchsatzes verwendeten technischen Umsetzungen zur Ermittlung der zugehörigen Vorfeldinformationen . In den Figuren ist zwar jeweils eine Arbeitsmaschine **1** schematisch angedeutet. Die Figuren sollen jedoch lediglich die in einer Arbeitsmaschine **1** zeitgleich zum Einsatz kommenden Systeme zur Erfassung der Informationen betreffend das geografische Vorfeld **6** der Arbeitsmaschine **1** aufzeigen. Mit anderen Worten ist vorgesehen, dass die verschiedenen Ausgestaltungen zur Erfassung von Vorfeldinformationen in einer einzigen landwirtschaftlichen Arbeitsmaschine **1** verwirklicht sind.

Gemäß dem vorbeschriebenen Verfahren können einerseits Vorfeldinformationen , die mittels des an der landwirtschaftlichen Arbeitsmaschine **1** angeordneten LiDAR-Sensors **10** ermittelt wurden, und andererseits Vorfeldinformationen, die aus der Biomasseprognosekarte **27** entnommen wurden, herangezogen. Eine derartige Ausführung ist in der **Figur 4** gezeigt.

Eine alternative Ausgestaltung des erfindungsgemäßen Verfahrens kann jedoch auch vorsehen, dass der LiDAR-Sensor **10,** wie in **Figur 5** gezeigt, gegen eine an der landwirtschaftlichen Arbeitsmaschine **1** angeordnete Kamera **11** ersetzt oder - wie in **Figur 6** gezeigt - um diese ergänzt wird, sodass dem Vorfelderfassungssystem **5** zwei Sensoren **7** zugeordnet sind. Der Einsatz eines LiDAR-Sensors **10** oder einer Kamera **11** hat jeweils Vor- und Nachteile, wobei die Nachteile bei einer Ausgestaltung gemäß **Figur 6,** d.h. einer Kombination aus LiDAR-Sensor **10** und Kamera **11,** durch den jeweilig anderen Sensor **7** ausgeglichen werden können.

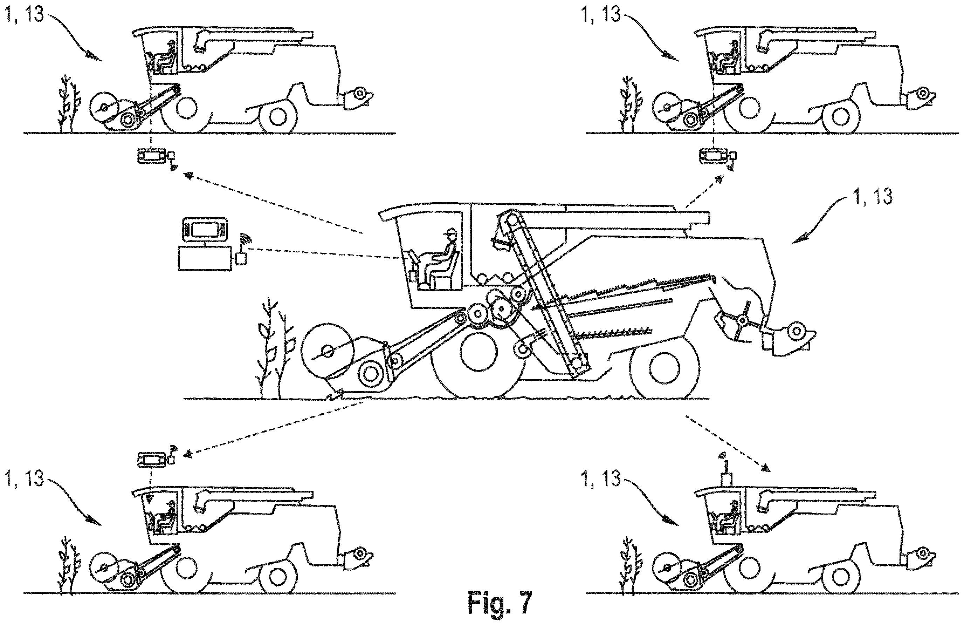

Bei dem in den **Figuren 1 bis 6** gezeigten Mähdrescher **13** ist das Vorfelderfassungssystem **5** an demjenigen Mähdrescher **13** angeordnet, dessen Fahrgeschwindigkeit einzustellen ist. Alternativ dazu kann es jedoch vorgesehen sein, dass ein weiteres Vorfelderfassungssystem **5** an einer weiteren, vorausfahrenden Arbeitsmaschine **1** angeordnet ist, wie in **Figur 7** gezeigt ist. Weiter ist es denkbar, dass ein Vorfelderfassungssystem **5** an einem von der Arbeitsmaschine **1** separaten Messfahrzeug oder anderweitig separat von der Arbeitsmaschine **1** angeordnet ist. In jedem Fall kann vorgesehen sein, dass die von den jeweiligen Vorfelderfassungssystemen **5** erfassten Informationen betreffend das abzuerntende Feld **3** zwischen den Arbeitsmaschinen **1** ausgetauscht und bei der Bestimmung eines jeweiligen Maschinenparameters berücksichtigt werden.

## Bezugszeichenliste

1 Arbeitsmaschine
2 Arbeitsorgan
3 Feld
4 Erntegut
5 Vorfelderfassungssystem
6 Vorfeld
7 Sensor
8 Steuersystem
9 Recheneinheit
10 LiDAR-Sensor
11 Kamera
12 Teilbreite
13 Mähdrescher
14 Dreschwerk
15 Abscheideanordnung
16 Reinigungsanordnung
17 Transportanordnung
18 Korntank
19 Fahrtrichtung
20 Fahrerkabine
21 Satellit
22 Datenverarbeitungseinrichtung
23 Datenübertragungseinrichtung
24 Speichereinheit
25 Fahrgeschwindigkeitssteuerung
26 Bestandshöhe
27 Biomasseprognosekarte
28 Fahrantrieb
29 Ertragssensor
30 Antriebsmotor
31 Durchsatzsensor
32 Schnitthöhensensor
33 Vorsatz
34 Schrägförderer
35 Prognosegüte der ersten Vorfeldinformation
36 Prognosegüte der zweiten Vorfeldinformation
37 Prognosegüte der dritten Vorfeldinformation

## Patentansprüche

1. Verfahren zur Ansteuerung mindestens einer selbstfahrenden landwirtschaftlichen Arbeitsmaschine (1), die Arbeitsmaschine (1) umfassend

   - mindestens ein Arbeitsorgan (2) zur Verarbeitung eines von einem abzuerntenden Feld (3) aufgenommenen Ernteguts (4) im Rahmen eines Ernteprozesses,
   - mindestens einen Fahrantrieb zum Antrieb der Arbeitsmaschine (1),
   - mindestens ein Vorfelderfassungssystem (5) zur Erfassung von Informationen hinsichtlich eines geografischen Vorfelds (6) der selbstfahrenden Arbeitsmaschine (1), wobei das Vorfelderfassungssystem (5) mindestens einen an der selbstfahrenden Arbeitsmaschine (1) angeordneten Sensor (7) umfasst,
   - mindestens ein Steuersystem (8), wobei das Steuersystem (8) mindestens eine Recheneinheit (9) zur Verarbeitung der von dem Vorfelderfassungssystem (5) erfassten Informationen zu mindestens einem Maschinenparameter zur Ansteuerung des mindestens einen Fahrantriebs und/oder zu mindestens einem Maschinenparameter des mindestens einen Arbeitsorgans (2) der selbstfahrenden Arbeitsmaschine (1) umfasst,

gekennzeichnet durch die folgenden Verfahrensschritten:

- Erfassen einer ersten Vorfeldinformation des geografischen Vorfelds (6) mittels des Sensors (7) des Vorfelderfassungssystems (5).
- Übermitteln der ersten Vorfeldinformation an das Steuersystem (8).
- Übermitteln einer zweiten Vorfeldinformation an das Steuersystem (8), wobei die zweite Vorfeldinformation mindestens eine Information aus einer Biomasseprognosekarte (27) umfasst.
- Bestimmen einer Prognosegüte (35, 36) zumindest der ersten und/oder zweiten Vorfeldinformation.
- Bestimmen mindestens eines Maschinenparameters zur Ansteuerung des Fahrantriebs und/oder des Arbeitsorgans (2) der selbstfahrenden Arbeitsmaschine (1) in Abhängigkeit zumindest der ersten und der zweiten Vorfeldinformation unter Berücksichtigung der jeweiligen Prognosegüte (35, 36) mittels der Recheneinheit (9) des Steuersystems (8).

2. Verfahren nach Anspruch 1, **dadurch gekennzeichnet, dass** eine Gewichtung der ersten und/oder der zweiten Vorfeldinformation bei der Bestimmung des Maschinenparameters erfolgt.

3. Verfahren nach Anspruch 2, **dadurch gekennzeichnet, dass** die Gewichtung der ersten Vorfeldinformation bei Vorliegen einer geringen Prognosegüte (35) der ersten Vorfeldinformation bei der Bestimmung des Maschinenparameters gegenüber der Gewichtung der zweiten Vorfeldinformation verringert wird.

4. Verfahren nach Anspruch 2 oder 3, **dadurch gekennzeichnet, dass** die Gewichtung der zweiten Vorfeldinformation bei Vorliegen einer geringen Prognosegüte (36) der zweiten Vorfeldinformation bei der Bestimmung des Maschinenparameters gegenüber der Gewichtung der ersten Vorfeldinformation verringert wird.

5. Verfahren nach einem der vorhergehenden Ansprüche, **dadurch gekennzeichnet, dass** der die erste Vorfeldinformation erfassende Sensor (7) in Form eines LiDAR-Sensors (10) oder in Form einer Kamera (11) ausgebildet ist.

6. Verfahren nach einem der vorhergehenden Ansprüche, **dadurch gekennzeichnet, dass** es sich bei der ersten Vorfeldinformation um eine Bestandsdichte, eine Schnitthöhe, eine Bestandshöhe (26) oder eine Teilbreite (12) des geografischen Vorfelds (6) der Arbeitsmaschine (1) handelt.

7. Verfahren nach einem der vorhergehenden Ansprüche, **dadurch gekennzeichnet, dass** die Biomasseprognosekarte (27) auf Satellitenbildern des abzuerntenden Felds (3) basiert.

8. Verfahren nach einem der vorhergehenden Ansprüche, **dadurch gekennzeichnet, dass** die Biomasseprognosekarte (27) in Abhängigkeit einer Reflexion des Sonnenlichts der auf dem Feld (3) befindlichen Pflanzen bestimmt wird, wobei hierzu ein normierter differenzierter Vegetationsindex (NDVI) bestimmt wird.

9. Verfahren nach Anspruch 8, **dadurch gekennzeichnet, dass** es sich bei der zweiten Vorfeldinformation um einen Wert des Vegetationsindex (NDVI) handelt.

10. Verfahren nach einem der vorhergehenden Ansprüche, **dadurch gekennzeichnet, dass** das Vorfelderfassungssystem (5) eine Mehrzahl von Sensoren (7) aufweist, wobei jeder der Sensoren (7) eine Information betreffend das Vorfeld (6) der landwirtschaftlichen Arbeitsmaschine (1) erfasst und die jeweilige Information als Vorfeldinformation an das Steuersystem (8) übermittelt.

11. Verfahren nach Anspruch 10, **dadurch gekennzeichnet, dass** für jede Vorfeldinformation eine Prognosegüte (35, 36, 37) bestimmt wird, wobei die Bestimmung des Maschinenparameters zusätzlich in Abhängigkeit jeder Vorfeldinformation unter Berücksichtigung der zugehörigen Prognosegüte (35, 36, 37) erfolgt.

12. Verfahren nach einem der vorhergehenden Ansprüche, **dadurch gekennzeichnet, dass** der selbstfahrenden landwirtschaftlichen Arbeitsmaschine (1) mindestens ein Sensor (29, 31, 32) zur Erfassung von Ist-Bestandsinformationen hinsichtlich des abzuerntenden Felds (3) zugeordnet ist.

13. Verfahren nach einem der vorhergehenden Ansprüche, **dadurch gekennzeichnet, dass** die Bestimmung einer jeweiligen Prognosegüte (35, 36, 37) mittels eines Vergleichs zwischen Ist-Bestandsinformationen und der zugehörigen Vorfeldinformation erfolgt.

14. Selbstfahrende landwirtschaftliche Arbeitsmaschine (1), **dadurch gekennzeichnet, dass** die Arbeitsmaschine (1) zur Durchführung eines Verfahrens nach einem der Ansprüche 1 bis 13 geeignet ist.

15. Selbstfahrende landwirtschaftliche Arbeitsmaschine (1) nach Anspruch 14, **dadurch gekennzeichnet, dass** die Arbeitsmaschine (1) in Form eines Feldhäckslers oder eines Mähdreschers (13) aus-

gebildet ist.

**Fig. 1**

EP 4 523 514 A1

EP 4 523 514 A1

**Fig. 2**

1, 13

5, 7, 10

6

12

Fig. 3

Fig. 4

Fig. 5

Fig. 6

Fig. 7

EP 4 523 514 A1

Europäisches Patentamt
European Patent Office
Office européen des brevets

**EUROPÄISCHER RECHERCHENBERICHT**

Nummer der Anmeldung

EP 24 19 0254

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | EP 3 981 235 A1 (DEERE & CO [US])<br>13. April 2022 (2022-04-13)<br>* Zusammenfassung *<br>* Abbildungen 1-3 *<br>* Absätze [0013], [0014], [0047],<br>[0071], [0155], [0156] *<br>- - - - - | 1,2,5-7,<br>10,12-15<br>3,4,8,9,<br>11 | INV.<br>A01D41/127 |
| A | US 2022/256768 A1 (BORGSTADT JUSTIN [US])<br>18. August 2022 (2022-08-18)<br>* das ganze Dokument *<br>- - - - - | 1-15 | |
| A | US 9 226 449 B2 (DEERE & CO [US])<br>5. Januar 2016 (2016-01-05)<br>* das ganze Dokument *<br>- - - - - | 1-15 | |
| A | US 2023/180662 A1 (PALLA BHANU KIRAN REDDY<br>[US] ET AL) 15. Juni 2023 (2023-06-15)<br>* das ganze Dokument *<br>- - - - - | 1-15 | |
| A | EP 3 097 759 A1 (CLAAS SELBSTFAHR<br>ERNTEMASCH [DE])<br>30. November 2016 (2016-11-30)<br>* das ganze Dokument *<br>- - - - - | 1-15 | RECHERCHIERTE<br>SACHGEBIETE (IPC)<br><br>A01D |
| A | EP 3 085 221 B1 (CLAAS SELBSTFAHRENDE<br>ERNTEMASCHINEN GMBH [DE])<br>18. Dezember 2019 (2019-12-18)<br>* das ganze Dokument *<br>- - - - - | 1-15 | |

Der vorliegende Recherchenbericht wurde für alle Patentansprüche erstellt

| Recherchenort | Abschlußdatum der Recherche | Prüfer |
|---|---|---|
| München | 9. Januar 2025 | Giorgini, Gabriele |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 24 19 0254

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2025

| Im Recherchenbericht angeführtes Patentdokument | Datum der Veröffentlichung | Mitglied(er) der Patentfamilie | Datum der Veröffentlichung |
|---|---|---|---|
| EP 3981235 A1 | 13-04-2022 | KEINE | |
| US 2022256768 A1 | 18-08-2022 | BR 102019006218 A2 | 05-11-2019 |
| | | CN 110402675 A | 05-11-2019 |
| | | EP 3563658 A1 | 06-11-2019 |
| | | US 2019327889 A1 | 31-10-2019 |
| | | US 2022256768 A1 | 18-08-2022 |
| US 9226449 B2 | 05-01-2016 | DE 102013201996 A1 | 07-08-2014 |
| | | EP 2764764 A1 | 13-08-2014 |
| | | US 2014215984 A1 | 07-08-2014 |
| US 2023180662 A1 | 15-06-2023 | AU 2022252746 A1 | 29-06-2023 |
| | | DE 102022123724 A1 | 15-06-2023 |
| | | US 2023180662 A1 | 15-06-2023 |
| EP 3097759 A1 | 30-11-2016 | DE 102015108374 A1 | 01-12-2016 |
| | | EP 3097759 A1 | 30-11-2016 |
| EP 3085221 B1 | 18-12-2019 | CA 2923037 A1 | 24-10-2016 |
| | | DE 102015106302 A1 | 27-10-2016 |
| | | EP 3085221 A1 | 26-10-2016 |
| | | RU 2016115274 A | 25-10-2017 |
| | | US 2016309656 A1 | 27-10-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3085221 B1
- EP 3097759 A1
- EP 3530098 A1
- EP 722269 A1